# EUROPÄISCHE PATENTSCHRIFT

(11) **EP 0 990 323 B1**
(45) Veröffentlichungstag und Bekanntmachung des Hinweises auf die Patenterteilung: **28.02.2007**
(21) Anmeldenummer: 98930695.6
(22) Anmeldetag: 16.05.1998
(51) Int. Cl.: H04J 13/00, H04J 14/02, H04B 10/08

(54) **VERFAHREN ZUR OPTISCHEN ÜBERTRAGUNG VON SIGNALISIERUNGS- UND STEUERINFORMATIONEN IN OPTISCHEN WELLENLÄNGENMULTIPLEXNETZEN**
METHOD FOR OPTICALLY TRANSMITTING SIGNALLING AND CONTROL INFORMATION IN OPTICAL WAVELENGTH MULTIPLEX NETWORKS
PROCEDE DE TRANSMISSION OPTIQUE D'INFORMATIONS DE SIGNALISATION ET DE COMMANDE DANS DES RESEAUX OPTIQUES A MULTIPLEXAGE EN LONGUEUR D'ONDE

(30) Priorität: 18.06.1997 DE 19725714
(43) Veröffentlichungstag der Anmeldung: 05.04.2000
(60) Teilanmeldung: 06018815.8
(73) Patentinhaber: Deutsche Telekom AG, 53113 Bonn (DE)
(72) Erfinder: ZIEMANN, Olaf, D-12307 Berlin (DE); GLADISCH, Andreas, D-13129 Berlin (DE)
(86) Internationale Anmeldenummer: PCT/EP1998/002894
(87) Internationale Veröffentlichungsnummer: WO 1998/058466

(56) Entgegenhaltungen:
- EP-A- 0 367 452
- US-A- 5 619 492
- NGUYEN L ET AL: "ALL-OPTICAL CDMA WITH BIPOLAR CODES" ELECTRONICS LETTERS, Bd. 31, Nr. 6, 16. März 1995, Seite 469/470 XP000530325
- RIZA N A ET AL: "SIGNALING SYSTEM FOR MULTIPLE-ACCESS LASER COMMUNICATIONS AND INTERFERENCE PROTECTION" APPLIED OPTICS, Bd. 32, Nr. 11, 10. April 1993, Seiten 1965-1972, XP000358187
- GIEHMANN L ET AL: "THE APPLICATION OF CODE DIVISION MULTIPLEX ACCESS FOR TRANSPORT OVERHEAD INFORMATION IN TRANSPARENT OPTICAL NETWORKS" OPTICAL FIBER COMMUNICATION CONFERENCE AND EXHIBITION, Bd. 2, 22. - 27. Februar 1998, Seiten 228-229, XP002078770 SAN JOSE, USA

## Beschreibung

Die Erfindung betrifft ein Verfahren zur optischen Übertragung von Signalisierungs- und Steuerinformationen sowie eine Empfangsvorrichtung für Signalisierungs- und Steuerinformationen.

Für die Übertragung eines Nutzinformationen tragenden Signals werden eine oder mehrere optische Frequenzen (Wellenlängen) verwendet. Bei Verwendung mehrerer optischer Frequenzen können diese als separate Kanäle angesehen werden. Dieses Verfahren wird als Wellenlängenmultiplex (WDM) bezeichnet, wobei ein Zugriff auf die einzelnen Kanäle für zumindest zwei Netzelemente möglich ist. Dies wird als Vielfachzugriff bezeichnet.

Es ist bekannt, daß für den Betrieb optischer Netze Signalisierungs- und Steuerinformationen übertragen werden müssen. Diese Signalisierungs- und steuer informationen dienen einerseits zum Steuern und Überwachen von Netzelementen und andererseits können damit Netzzustände dargestellt und verändert werden. Im Stand der Technik ist eine Literaturstelle (Chawki, M.J. Tholey, V.Le Gac I: Management protocol of a reconfigurable WDM ring network using SDH overhead bytes; OFC 96 Technical Digest FD3) bekannt, bei der die Signalisierungs- und Steuerinformationen innerhalb des Signals der Nutzinformationen (In-Channel-Signalisierung) übertragen werden. Ferner ist im Stand der Technik eine Literaturstelle (Draft Recomendation ITU-T G.MCS Geneva June, 1996) bekannt, bei der die Signalisierungs- und Steuerinformationen auf einem zusätzlichen Steuerkanal, entweder auf demselben oder einem anderen Medium übertragen werden. Schließlich sei eine Literaturstelle (S. Johansson: Transport Network Involving a Reconfigurable WDM Layer, Journal of Lightwave Technology 14(1996)6, pp.1341-1349) genannt, in der mit Hilfe von sogenannten Pilottönen die Signalisierungs- und Steuerinformationen übertragen werden. Dabei werden die Pilottöne in einem nicht von den Nutzinformationen genutzten elektrischen Frequenzbereich übertragen.

Nachteilig im Stand der Technik ist bei der Nutzung der In-Channel-Signalisierung, daß die Signalisierungs- und Steuerinformationen durch Einsatz zusätzlicher elektrischer Demultiplexer und elektrischer Multiplexer von dem Nutzinformationssignal getrennt werden müssen, wobei zunächst eine Rückwandlung des optischen Signals mit seiner gesamten Bandbreite in ein elektrisches Signal erfolgen muß. Zusätzlich ist dann zur Verarbeitung der Signalisierungs- und Steuerinformationen ein Transceiver (Sender/Empfänger) an jedem Netzelement notwendig.

Bei einem Einsatz von zusätzlichen Steuerkanälen für die Signalisierungs- und Steuerinformationen ist die Abtrennung/Anfügung der Steuerkanäle von den Kanälen der Nutzinformatiönen durch geeignete Mittel notwendig. Zusätzlich ist der Einsatz eines Transceivers für die Verarbeitung der Signalisierungs- und Steuerinformationen erforderlich. Wegen des Vielfachzugriffs ist der Einsatz eines Protokolls notwendig, welches den Einsatz des Transceivers regelt, das heißt, es legt fest, zu welchem Zeitpunkt der Transceiver senden oder empfangen soll und/oder welcher Teilnehmer den Transceiver benutzen kann.

Die Nutzung von Pilottönen in optischen Netzen mit unterschiedlichen Hierarchiestufen ist schwierig, da in optischen Netzen die Übertragung der Informationen mit unterschiedlichen Datenraten erfolgen kann. Dadurch ergeben sich bei Betrachtung der gesamten Netzstruktur keine einheitlich freien Frequenzbereiche für die Übertragung der Pilottöne.

Aus der US 5,619,492 A geht ein optisches, lokales Netzwerk (LAN) hervor, in dem Steuerinformationen in einem Datenpaket zusammen mit Nutzinformationen übertragen werden. Das gesamte Datenpaket aus Steuerinformationen und Nutzinformationen wird CDMA-kodiert. In einem Empfangsteil wird das gesamte Datenpaket wieder CDMA-dekodiert.

Aus der EP 0 367 452 A2 geht ein optisches Netzwerk hervor, in dem Informationen im CDMA-Verfahren und im Wellenlängenmultiplex-Verfahren übertragen werden.

Die Literaturstelle von Nguyen, L. et al.: "Alloptical DCMA with bipolar codes"; ELECTRONICS LETTERS; Band 31 Nr. 6, 16. März 1995, Seiten 469/470 beschreibt ein CDMA-Verfahren in optischen Netzen, wobei bipolare codes verwendet werden.

Die nachveröffentlichte Literaturstelle von Giehmann, L. et al.: "The application of code division multiple access for transport overhead information in transparent optical networks", OPTICAL FIBER COMMUNICATION CONFERENCE AND EXHIBITION, Band 2, 22. bis 27. Februar 1998, Seiten 228 bis 229 beschreibt die CDMA-Kodierung der Signalisierungs- und Steuerinformationen in optischen Netzen, wobei die CDMA-kodierten Signalisierungs- und Steuerinformationen dem Signal der Nutzinformationen aufgeprägt werden.

Es ist daher Aufgabe der Erfindung, ein Verfahren zur optischen Übertragung von Signalisierungs- und Steuerinformationen in optischen Netzen anzugeben, das keinen freien optischen oder elektrischen Frequenzbereich benötigt und gleichzeitig ein zu übertragendes Nutzinformationssignal nicht stört, und das eine empfangsseitige Extraktion der Signalisierungs- beziehungsweise Steuerinformationen ohne Rückgewinnung der Nutzinformationen ermöglicht.

Die der Erfindung zugrundeliegende Aufgabe wird erfindungsgemäß dadurch gelöst, daß das CDMA-Signal (CDMA = Code Division Multiple Access) der Signalisierungs- und Steuerinformationen dem Signal der Nutzinformationen additiv aufgeprägt wird, wobei der Modulationshub des CDMA-Signals geringer als der Modulationshub des Signals der Nutzinformationen ist. Dabei können Signalisierungs- und Steuerinformationen einem auf einem Lichtwellenleiter (LWL) existierenden Multiplexsignal oder einzelnen Kanälen aufgeprägt werden. Durch Verwendung des Kodemultiplex-Verfahrens ist es in vorteilhafter Weise möglich, mittels der Signalisierungs- und Steuerinformationen innerhalb eines optischen Netzes Informationen wahlweise an einzelne Netzelemente oder an alle Netzelemente zu senden. Dadurch, daß der Modulationshub des CDMA-Signals geringer ist als der des Nutzinformationssignals wird eine Beeinflussung des Signals der Nutzinformationen im wesentlichen vermieden. Außerdem ist vorteilhaft, daß das Steuersignal unabhängig von einer Synchronisation gegenüber dem Nutzsignal ist. Das heißt, daß das CDMA-Signal mit einer anderen Übertragungsrate als die Nutzinformationen übertragen werden kann.

Für die ausführliche Beschreibung des CDMA-Verfahrens, wird auf zwei Literaturstellen (R.C. Dixon: "Spread Spectrum Systems"; John Wiley and Sons, 1996 und A.J. Viterbi: "CDMA Principals of Spread Spectrum Communications"; Addison-Wesley, 1995) verwiesen.

Weiterhin ist es vorteilhaft, daß eine Identifikation (Adressierung) eines Netzelements über einen vorgebbaren Kode erfolgen kann. Dieser Kode kann unipolar oder bipolar, gegebenenfalls auch mehrstufig sein. Bei Verwendung des CDMA-Verfahrens wird ein zu übertragendes Bit der Signalisierungs- und Steuerinformationen mit einem Kodewort verknüpft, so daß eine Kodesequenz entsteht, die sich aus mehreren Chips zusammensetzt. Als "Chips" werden die einzelnen Bits der Kodesequenz bezeichnet, um eine Verwechslung mit den Bits der Signalisierungs- und Steuerinformationen zu vermeiden. Durch eine Zuordnung der Kodeworte zu einzelnen Netzelementen, können diese angesprochen werden. Es ist also in vorteilhafter Weise eine Adressierung einzelner Netzelemente möglich. Dazu ist dem anzusprechenden Netzelement ein entsprechendes Kodewort softwaremäßig eindeutig zuzuordnen. Um mehrere Netzelemente eines optischen Netzes ansprechen zu können, sind mehrere derartige Kodeworte notwendig, wobei jeweils zumindest ein Kodewort einem Netzelement eindeutig zuzuordnen ist. Beispielsweise ist es jedoch auch möglich, einem Netzelement zwei Kodeworte zuzuordnen, die dann jeweils die Information "0" oder "1" darstellen. Vorzugsweise sind die einzelenen Kodeworte der entsprechenden Netzelemente orthogonal zueinander, wobei dann mehrere Kodeworte eine sogenannte Kodefamilie bilden. Durch Verwendung einer entsprechenden Chip-Anzahl (Kodewort-Länge), ist es möglich, nahezu beliebig viele Netzelemente ansprechen zu können.

Wird nun ein CDMA-kodiertes Bit der Signalisierungs- und Steuerinformationen an ein Netzelement übertragen, welches das entsprechende Kodewort softwaremäßig aufweist, kann das Bit dadurch identifiziert werden, daß zunächst beide Kodeworte chipweise multipliziert und anschließend die einzelnen Multiplikationsergebnisse addiert werden. So ist zum Beispiel bei einem 4-Chip-Kodewort als Summe maximal der Betrag von 4 möglich. Durch Übertragungsfehler beziehungsweise Rauschen ist es möglich, daß einzelne Chips nicht eindeutig erkannt werden, oder sogar verloren gehen. Der Verlust eines Chips bewirkt, daß als Summe lediglich der Betrag von 3 errechnet wird. Jedoch ist auch hier das Ergebnis eindeutig, da beispielsweise eine chipweise Multiplikation und anschließende Addition mit einem falschen Kodewort, das zum richtigen Orthogonal ist als Ergebnis eine 0 ergibt. Dadurch ist eine eindeutige Zuordnung eines Bits der Signalisierungs- und Steuerinformationen zu einem Netzelement möglich. Darüber hinaus ergibt sich durch die chipweise Multiplikation und anschließende Addition ein sogenannter Kodierungsgewinn, da das ursprüngliche die Wertigkeit 1 aufweisende Bit durch die CDMA-Kodierung und die anschließende Dekodierung die Wertigkeit 4 erhält. Dadurch wird der Störabstand verbessert, das heißt, es wird ein Kodierungsgewinn erzielt. Ferner ist es in vorteilhafter Weise möglich, durch Auswahl von vorgebbaren Kodes besonders wichtige Signalisierungs- und Steuerinformationen bevorzugt zu übertragen.

In einer Weiterbildung der Erfindung wird beim Aufprägen des Signals der Signalisierungs- und Steuerinformationenen auf die Hüllkurve des Nutzsignals durch Intensitätsmodulation ein kleiner Modulationsindex gewählt.

In einer weiteren bevorzugten Ausführungsform des Verfahrens ist vorgesehen, daß das CDMA-kodierte Signal der Signalisierungs- und Steuerinformationen und das Signal der Nutzinformationen in einem gemeinsamen Netzelement als Summensignal erzeugt werden. Das heißt, sowohl das CDMA-kodierte Signal als auch das Signal der Nutzinformationen werden in einem gemeinsamen Sender (Modulator) erzeugt. Das geschieht dadurch, daß die zunächst als elektrische Impulse vorliegenden Signale mit einer geeigneten Einrichtung in optische Signale umgewandelt werden, dabei ist dem Signal der Nutzinformationen das CDMA-kodierte Signal bereits aufgeprägt. Alternativ kann vorgesehen sein, daß das CDMA-kodierte Signal der Signalisierungs- und Steuerinformationen dem in einem Netzelement erzeugten Signal der Nutzinformationen durch ein weiteres Netzelement aufgeprägt wird.

Das so entstandene Summensignal, bestehend aus dem CDMA-kodierten Signal und dem Signal der Nutzinformationen, kann von einem weiteren Netzelement empfangen werden. Selbstverständlich können auch mehrere Summensignale zu zumindest einem Wellenlängenmultiplexsignal zusammengefaßt werden.

In einer Weiterbildung der Erfindung ist vorgesehen, daß am Eingang eines Netzelements zum Summensignal beziehungsweise Wellenlängenmultiplexsignal ein dazu identisches Zusatzsignal erzeugt wird. Dies geschieht vorzugsweise mittels eines sogenannten Monitorkopplers. Der Monitorkoppler kann einem Lichtwellenleiter zugeordnet sein, der das Wällenlängenmultiplexsignal führt. Dem Monitorkoppler kann vorzugsweise ein optisches Filterelement nachgeordnet sein, das dann aus dem Wellenlängenmultiplexsignal zumindest ein Summensignal eines optischen Kanals herausfiltert. Alternativ kann vorgesehen sein, daß der Monitorkoppler einem optisch-selektiven Element zugeordnet ist, in dem das Wellenlängenmultiplexsignal in einzelne Summensignale gemäß den verwendeten Wellenlängen aufgeteilt wird. Der Monitorkoppler ist dann zumindest einem Lichtwellenleiter zugeordnet, der ein Summensignal trägt. Dadurch ist es möglich, auf das eben beschriebene Filterelement zu verzichten. Das heißt, das Summensignal kann vom Monitorkoppler direkt an einen CDMA-Dekodierer weitergeleitet werden.

Das nun vorliegende Summensignal, wird vom CDMA-Dekodierer erfaßt. Dazu ist der Dekodierer so ausgebildet, daß er lediglich die Signale der Signalisierung- und Steuerinformationen erfaßt. Dies wird dadurch möglich, daß die Nutzinformationen mit einer wesentlich höheren Übertragungsrate (M-Bitbereich) übertragen werden als die Signalisierungs- und Steuerinformationen (k-Bitbereich). Im CDMA-Dekodierer erfolgt nun ein Vergleich der gesendeten Kodeworte mit dem im CDMA-Dekodierer abgelegten Kodewort. Bei einer Übereinstimmung -wie eingangs beschrieben- kann nun die ursprüngliche Bitfolge der Signalisierungs- und Steuerinformationen zurückgewonnen werden, wobei sie in den elektrischen Bereich umgewandelt werden. Dadurch wird in einer geeigneten nachfolgenden Einrichtung eine Verarbeitung möglich wird. Bei dieser Verarbeitung werden einerseits Steuerinformationen für ein Netzelement ausgewertet, andererseits ist es möglich, daß weitere Signalisierungs- und Steuerinformationen generiert werden können, so daß weitere Netzelemente gesteuert oder überwacht werden können. Anschließend wird dieses neue Signal der Signalisierungs- und Steuerinformationen -in einer Weiterbildung der Erfindung- wieder CDMA-kodiert und dem Signal der Nutzinformationen aufgeprägt. Es kann also in vorteilhafter Weise auf eine Umwandlung der Nutzinformationen in den elektrischen Bereich verzichtet werden, was zu einer wesentlichen Vereinfachung und Kostenminimierung des gesamten Netzes führt.

Ferner ist eine Vorrichtung zum Empfangen von Signalisierungs- und Steuerinformationen vorgesehen, bei der die Empfangseinrichtung der Signalisierungs- und Steuerinformationen zumindest einen Monitorkoppler und eine Signalisierungseinrichtung aufweist. Der Monitorkoppler erzeugt ein zum empfangenen Signal aus Signalisierungs- und Steuerinformationen und Nutzinformationen identisches Zusatzsignal, das dem CDMA-Dekodierer zugeführt wird, der aus diesem Signal die Signalisierungs- und Steuerinformationen herausfiltert und anschließend dekodiert, wobei die dekodierten Signalisierungs- und Steuerinformationen der Signalisierungseinrichtung zugeführt werden, die das Netzelement steuert. Insbesondere dadurch, daß der Monitorkoppler dieses Zusatzsignal erzeugt, aus dem im CDMA-Dekodierer die Steuerinformationen herausgefiltert werden, ist es auf besonders vorteilhafte Weise möglich, auf eine Rückgewinnung der Nutzinformationen zu verzichten, da die Signalisierungs- und Steuerinformationen dem Nutzsignal aufgeprägt sind und daher leicht von diesem separiert werden können.

Weiterhin ist der oben beschriebenen Vorrichtung eine Sendeeinrichtung mit einem Kodemultiplex-Kodierer zugeordnet. Dadurch ist es möglich, die in der Signalisierungseinrichtung erzeugten Informationen wieder zu kodieren, so daß sie anschließend mit einem Modulator dem Signal der Nutzinformationen durch Addition aufgeprägt werden können.

Die Erfindung wird nun mit Bezug auf die Zeichnungen näher erläutert. Es zeigen:
- Figur 1: ausschnittweise ein optisches Netz zur Übertragung von Nutzinformationen,
- Figur 2: ein Blockschaltbild eines Netzelements,
- Figur 3: ein erstes Ausführungsbeispiel einer Empfangseinrichtung des Netzelements gemäß Figur 2,
- Figur 4: ein weiteres Ausführungsbeispiel einer Empfangseinrichtung,
- Figur 5: ein drittes Ausführungsbeispiel einer Empfangseinrichtung,
- Figur 6: ein erstes Ausführungsbeispiel einer Sendeeinrichtung des Netzelements gemäß Figur 2,
- Figur 7: ein zweites Ausführungsbeispiel einer Sendeeinrichtung,
- Figur 8: ein drittes Ausführungsbeispiel einer Sendeeinrichtung,
- Figur 9: ein viertes Ausführungsbeispiel einer Sendeeinrichtung, und
- Figur 10: ein Ausführungsbeispiel eines optisch-selektiven Elements.

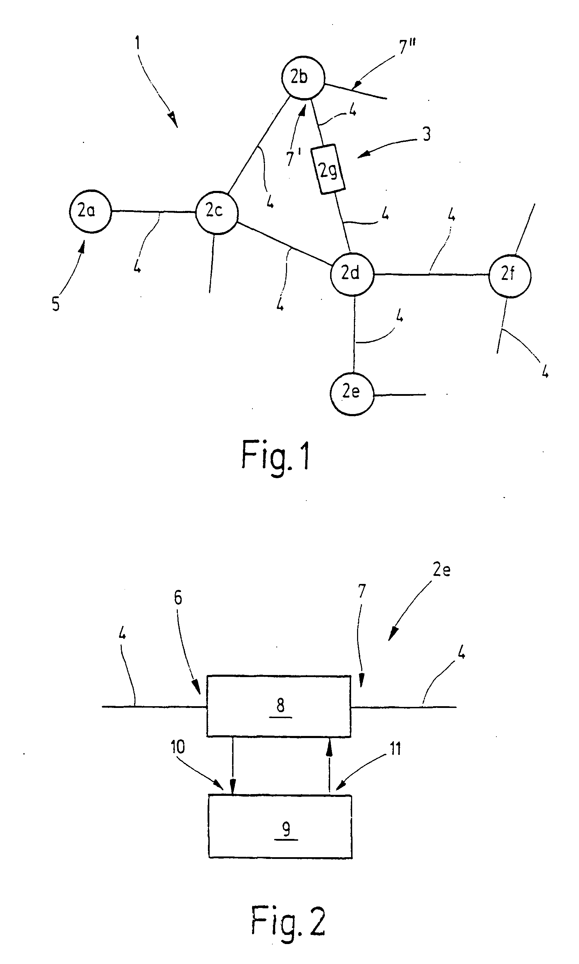

Die Figur 1 zeigt ausschnittweise ein optisches Netz 1, welches Netzelemente 2a bis 2g umfaßt. Die Netzelemente 2a bis 2f werden auch als Netzknoten bezeichnet. Das Netzelement 2g ist beispielsweise ein optischer Verstärker 3. Die einzelnen Netzelemente 2a bis 2g sind durch Lichtwellenleiter (im folgenden auch kurz "LWL" genannt) 4 verbunden. Das Netzelement 2a kann als Eirrspeisung 5 ausgebildet sein, die lediglich eine Sendeeinrichtung für optische Signale enthält.

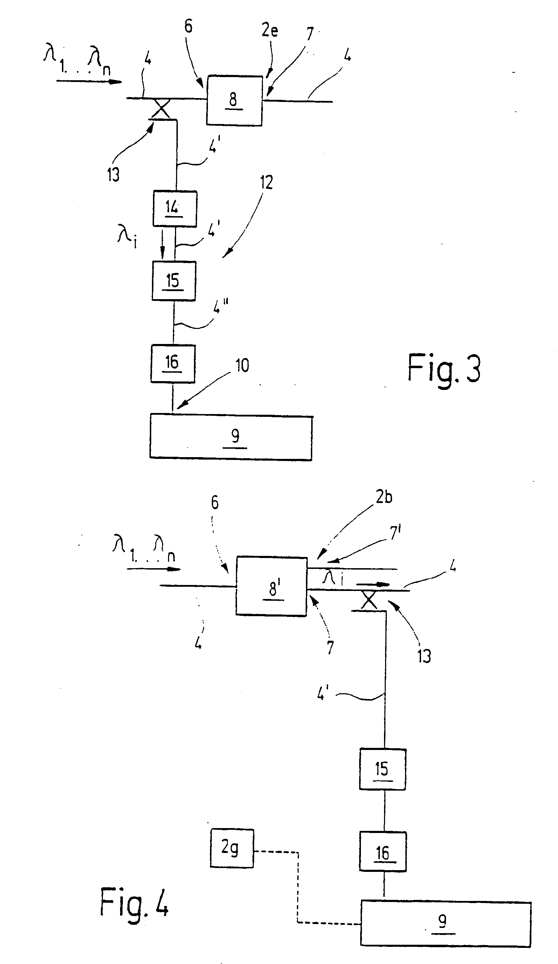

In Figur 2 ist das Netzelement 2e dargestellt. Es ist lediglich an zwei Lichtwellenleiter 4 angeschlossen, wobei im folgenden rein beispielhaft davon ausgegangen wird, daß das Netzelement 2e einen Eingang 6 und einen Ausgang 7 aufweist, an die die LWL 4 angeschlossen sind. Das Netzelement 2e umfaßt ein optisch-selektives Element 8 sowie eine Signalisierungseinrichtung 9, die zur Auswertung und Verarbeitung der Signalisierungs- und Steuerinformationen dient. Es ist erkennbar, daß die Signalisierungseinrichtung 9 eine Eingabe 10 und eine Ausgabe 11 aufweist. Dem Netzelement 2e ist eine Empfangseinrichtung 12 zugeordnet, die zwischen dem Element 8 und der Eingabe 10 der Signalisierungseinrichtung 9 angeordnet ist (Figur 3).

Die Empfangseinrichtung 12 für Signalisierungs- und Steuerinformationen umfaßt einen Monitorkoppler 13 (Monitorabzweig), ein optisches wellenlängenselektives Element, insbesondere Filter 14, einen Empfänger 15, der eine optisch/elektrische Wandlung eines Signals ermöglicht, und ein CDMA-Dekodierer 16. Die Empfangseinrichtung 12 ist mit der Eingabe 10 der Signalisierungseinrichtung 9 verbunden. Das Element 8 ist -wie bereits erwähnt- am Eingang 6 und am Ausgang 7 jeweils mit einem LWL 4 gekoppelt. Der Monitorkoppler 13 ist dem Eingang 6 des Elements 8 zugeordnet, und ist über einen LWL 4' mit dem Filter 14 verbunden, welches wiederum mit dem Empfänger 15 über einen weiteren LWL 4' verbunden ist. Der Empfänger 15 wandelt ein optisches Signal in ein elektrisches Signal um und leitet es dem CDMA-Dekodierer 16 über eine Leitung 4' ' zu. Der CDMA-Dekodierer 16 steht in leitender Verbindung mit der Signalisierunaseinrichtung 9.

Im folgenden wird anhand der Figur 3 die Funktionsweise der Empfangseinrichtung näher beschrieben, wobei davon ausgegangen wird, daß am Netzelement 2a ein Wellenlängenmultiplexsignal mit den Wellenlängen λ₁ bis λₙ eingespeist wurde, welches nun am Eingang 6 des optischen Elements 8 abgreifbar ist.

Der Monitorkoppler 13 erzeugt beispielsweise durch Leistungsaufteilung zwei zueinander identische Wellenlängenmultiplexsignale mit den Wellenlängen λ₁ bis λₙ, wobei ein Teil des Signals das Element 8 erreicht und der andere Teil des Signals über den LWL 4' dem Filter 14 zugeführt wird. Der Filter 14 ist so ausgestaltet, daß er vorzugsweise nur eine Wellenlänge λᵢ aus dem Wellenlängenmulitplexsignal herausfiltert. So ist am Ausgang des Filters 14 ein Summensignal mit der Wellenlänge λᵢ vorhanden, das über den LWL 4' dem Empfänger 15 zugeführt wird. Der Empfänger 15 wandelt das Summensignal in ein elektrisches Signal um und leitet es über die Leitung 4'' dem CDMA-Dekodierer 16 zu. Der CDMA-Dekodierer 16 ist insbesondere so ausgebildet, daß er das Signal der Nutzinformationen nicht erkennt, was beispielsweise dadurch erreicht wird, daß er eine Filterfunktion enthält, mit der es möglich ist, aus dem Summensignal lediglich das CDMA-kodierte Signal der Signalisierungs- und Steuerinformationen zu erkennen. Dies wird dadurch möglich, daß die Nutzinformationen mit einer wesentlich höheren Datenrate übertragen werden als die Signalisierungs- und Steuerinformationen, so daß hier ein elektrisches Filterelement vorgesehen sein kann. Dadurch kann die Übertragung von Signalisierungs- und Steuerinformationen asynchron gegenüber dem Nutzsignal erfolgen.

Im CDMA-Dekodierer 16 ist ein Kodewort softwaremäßig hinterlegt, welches sozusagen als Schlüssel für die für dieses Netzelement 2e vorgesehenen Signalisierungs- und Steuerinformationen dient und diese dadurch dekodiert werden können. Nachdem die Signalisierungs- und Steuerinfromationen dekodiert wurden, erfolgt ihre Weitergabe an die Signalisierungseinrichtung 9. Sie wertet diese Informationen aus und steuert beispielsweise das Netzelement 8. Eine derartige Steuerung kann dann vorgesehen sein, wenn das Netzelement 2e einen weiteren Ausgang aufweist. Es ist dann möglich, das Wellenlängenmultiplexsignal nach dem Eingang 6 in verschiedene Teilsignale aufzuteilen, wobei dann die Teilsignale an die Ausgänge weitergeleitet werden. Das Element 8 übernimmt somit eine Art Weichenfunktion für das Wellenlängenmultiplexsignal. Die Aufteilung des Wellenlängenmultiplexsignals, das heißt welche Wellenlängen an welchem Ausgang zur Verfügung gestellt werden, steuert die Signalisierungseinrichtung 9 aufgrund der ihr zur Verfügung gestellten Signalisierungs- und Steuerinformationen.

In Figur 4 ist für ein weiteres Ausführungsbeispiel der Empfangseinrichtung rein beispielhaft das Netzelement 2b herangezogen. Es weist ein Element 8' auf, das einen Eingang 6 sowie zwei Ausgänge 7 und 7' umfaßt. Am Eingang 6 ist das Wellenlängenmultiplexsignal mit den Wellenlängen λ₁ bis λₙ vorhanden. Das Element 8' teilt dieses Wellenlängenmultiplexsignal beispielsweise so auf, daß am Ausgang 7 lediglich ein Signal anliegt, welches nur eine Wellenlänge λᵢ aufweist. Mithin liegt hier bereits ein einzelnes Summensignal vor, das durch den Monitorkoppler 13 wiederum in zwei identische Teilsignale aufgeteilt wird. Ein Teilsignal gelangt über den LWL 4' zum Empfänger 15, der wiederum eine Wandlung vom optischen Bereich in den elektrischen Bereich vornimmt und das elektrische Signal dem CDMA-Dekodierer 16 übermittelt. Der CDMA-Kcdierer steht -wie bereits beschrieben- mit der Signalisierungseinrichtung 9 in leitender Verbindung. Das andere Teilsignal wird am Ausgang 7' über den LWL 4 dem Netzelement 2g zugeführt, in diesem verstärkt und an den Netzknoten 2d weitergeleitet.

Die Dekodierung der Signalisierungs- und Steuerinformationen erfolgt im Ausführungsbeispiel nach Figur 4 in derselben Weise wie im Ausführungsbeispiel nach Figur 3, wobei lediglich auf den Filter 14 verzichtet werden kann, da am Monitorkoppler 13 kein Wellenlängenmultiplexsignal liegt, sondern lediglich ein Summensignal abgegriffen werden muß.

Weiterhin ist in der Figur 4 ersichtlich, daß das Netzelement 2g mit der Signalisierungseinrichtung 9 in Verbindung steht. Dies kann entweder über die bereits vorhandenen LWL erfolgen, andererseits ist auch eine Funkverbindung oder eine elektrische Leitung möglich. Wie bereits erwähnt, ist das Netzelement 2g ein optischer Verstärker 3, der ein optisches Signal verstärken kann, welches durch Verluste im Lichtwellenleiter abgeschwächt worden ist. Beispielsweise ist durch die Signalisierungseinrichtung 9 der Verstärkungsgrad des Verstärkers 3 regelbar, andererseits ist es auch möglich Fehlermeldungen des Verstärkers 3 an die Signalisierungseinrichtung 9 zu übermitteln. Diese Fehlermeldungen sind dann vorzugsweise am Ort des Netzelements 2b abrufbar, so daß Reparaturmaßnahmen oder Wartungsarbeiten eingeleitet werden können. Die Signalisierungseinrichtung 9 gemäß Figur 4 steuert -wie bereits eingangs beschrieben- das optisch-selektive Element 8'.

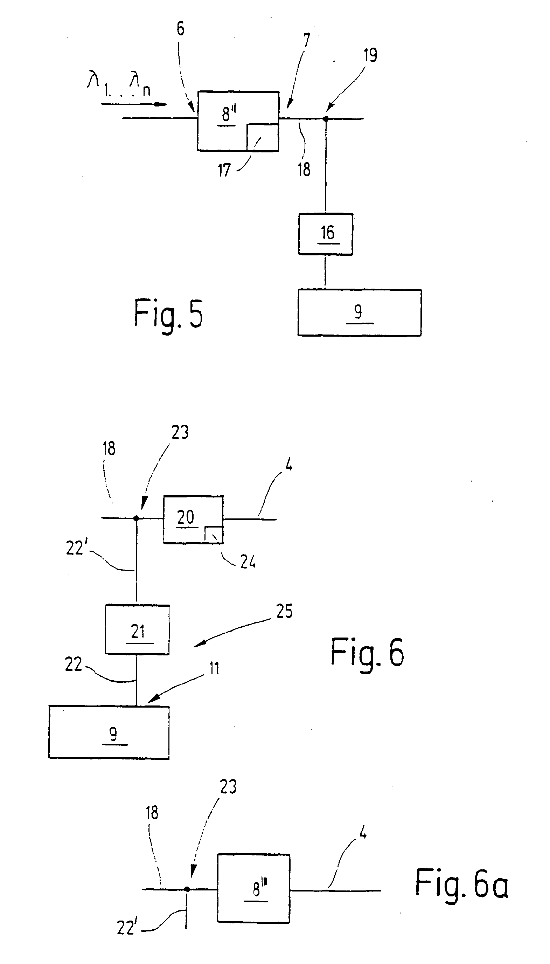

Das Ausführungsbeispiel gemäß Figur 5 zeigt ein Element 8" , an dessen Eingang 6 das Wellenlängenmultiplexsignal zugeführt wird. Das Element 8" umfaßt eine optisch/elektrische Wandlereinheit 17, die das Wellenlängenmultiplexsignal in ein elektrisches Signal umwandelt. Der Ausgang 7 des Elements 8" ist dabei eine elektrische Leitung 18, von der ein Abzweig 19 mit dem CDMA-Dekodierer 16 in leitender Verbindung steht. Der CDMA-Dekodierer 16 arbeitet in derselben Weise wie eingangs beschrieben, so daß auf die entsprechenden Beschreibungsteile verwiesen werden kann.

Nach dem Abzweig 19 führt die elektrische Leitung 18 zu einem Modulator (nicht dargestellt), der das elektrische Signal wieder in ein optisches Signal umwandelt.

Ein derartiger Modulator 20 ist in Figur 6 dargestellt. Nachdem die Signalisierungseinrichtung 9 die Signalisierungs- und Steuerinformationen empfangen hat, diese ausgewertet und möglicherweise neue Signalisierungs- und Steuerinformationen generiert hat, werden diese an der Ausgabe 11 der Signalisierungseinrichtung 9 einer Sendeeinrichtung 25 über eine elektrische Verbindungsleitung 22 zugeführt, wobei die Sendeeinrichtung 25 einen CDMA-Kodierer 21 umfaßt. Der CDMA-Kodierer 21 verknüpft die einzelnen Bits der Signalisierungs- und Steuerinformationen mit einem Kodewort, so daß sie einem weiteren Netzelement zugeordnet werden können. Nach der CDMA-Kodierung erfolgt eine Weiterleitung über die elektrische Verbindungsleitung 22' zu einer Zusammenführung 23, sc daß dem Modulator 20 ein Summensignal in elektrischer Form zugeführt werden kann. Der Modulator 20 beinhaltet eine elektrisch/optische Wandlereinheit 24, die das elektrische Summensignal in ein optisches Signal umsetzt. Diesem Summensignal ist das Signal der Signalisierungs- und Steuerinformationen bereits aufgeprägt. Es wird über den LWL 4 dem Netz 1 zugeführt.

Alternativ kann vorgesehen sein -wie in Figur 6a dargestellt-, daß anstelle des Modulators 20 ein Element 8' ' ' vorgesehen ist, das eingangsseitig einen elektrischen Anschluß aufweist. Innerhalb des Elements 8''' erfolgt die elektrisch/optische Umwandlung in ein Signal, das dann dem Netz 1 über einen LWL 4 zugeführt ist. Für die Beschreibung der Sendeeinrichtung 25 wird auf die Figur 6 verwiesen.

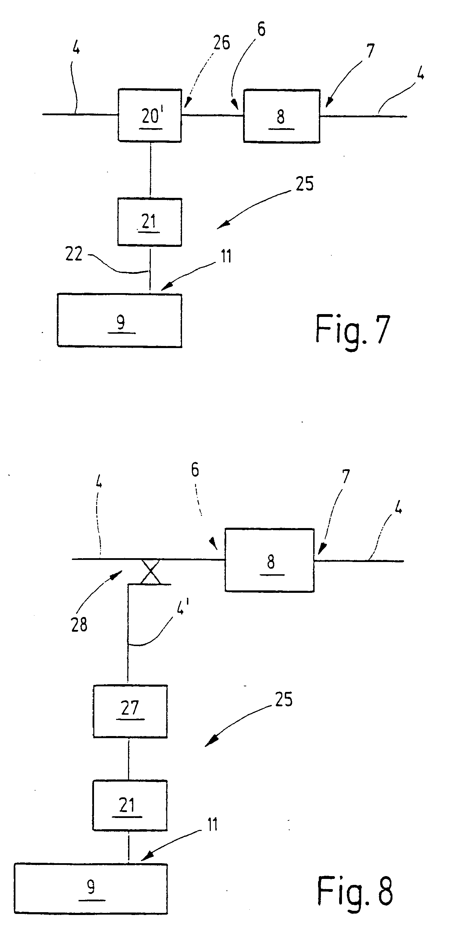

Die Figur 7 zeigt einen Modulator 20', mit dem es möglich ist, ein von der Sendeeinrichtung 25 stammendes Signal mit Signalisierungs- und Steuerinformationen einem optischen Signal durch Addition aufzuprägen, welches ihm über den LWL 4 zur Verfügung gestellt wird. Mit diesem Signal werden die Nutzinformationen übertragen. Durch die Addition der beiden Signale entsteht am Ausgang 26 des Modulators ein Summensignal, das dem Element 8 über den Eingang 6 zugeführt wird. An seinem Ausgang 7 wird das Summensignal wieder dem Netz 1 durch den LWL 4 zugeführt.

Eine weitere Ausführungsvariante einer Sendeeinrichtung 25 ist in Figur 8 dargestellt. Die Sendeeinrichtung 25 weist eine optische Quelle 27 auf, die die CDMA-kodierten Informationen aus der Signalisierungseinrichtung 9 beziehungsweise aus dem CDMA-Kodierer 21 in optische Signale umwandelt. Über einen LWL 4' werden die Signalisierungs- und Steuerinformationen über einen Koppler 28 in den LWL 4 eingekoppelt. Dadurch kann dem Element 8 bereits ein Summensignal übermittelt werden, welches die Nutzinformationen und die Signalisierungs- und Steuerinformationen enthält.

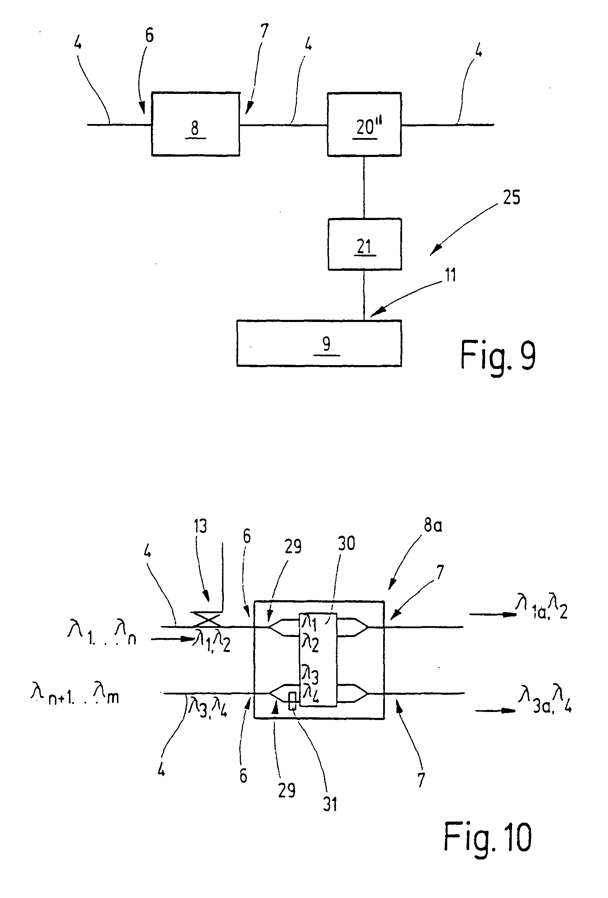

Alternativ zur Figur 8 kann vorgesehen sein, daß einem Element 8 ein Modulator 20'' nachgeordnet ist, der dazu dient, CDMA-kodierte Signalisierungs- und Steuerinformationen aus der Sendeeinrichtung 25 nachträglich dem Nutzsignal aufzuprägen, so daß es über den LWL 4 dem Netz 1 als Summensignal zugeführt werden kann (siehe Figur 9). Gleiche beziehungsweise gleichwirkende Teile wie in den vorhergehenden Beschreibungsteilen erwähnt; sind mit gleichen Bezugszeichen versehen. Insofern wird auf die zugehörigen Ausführungen verwiesen.

Die Figur 10 zeigt ein optisch-selektives Element 8a, das im Unterschied zum optisch-selektiven Element 8 zwei Eingänge 6 und zwei Ausgänge 7 aufweist. An einem Eingang 6 steht beispielsweise über den LWL 4 ein Wellenlängenmultiplexsignal mit den Wellenlängen λ₁ bis λₙ an. Am anderen Eingang 6 steht ein weiteres Wellenlängenmultiplexsignal mit den Wellenlängen λₙ₊₁ bis λₘ an. Für die nachfolgende Beschreibung wird rein beispielhaft vereinfacht davon ausgegangen, daß an jedem Eingang 6 des Elements 8a ein Wellenlängenmultiplexsignal ansteht, welches lediglich aus zwei unterschiedlichen Wellenlängen zusammengesetzt ist. Beispielsweise sind dies die Wellenlängen λ₁ und λ₂ sowie die Wellenlängen λ₃ und λ₄. Das Wellenlängenmultiplexsignal (λ₁, λ₂) ist über einen Monitorkoppler 13 abgreifbar. Der Monitorkoppler 13 steht vorzugsweise in Verbindung mit dem Filter 14 gemäß Figur 3. Insofern wird für die Verarbeitung dieses Signals auf die entsprechende Beschreibung verwiesen.

Das Element 8a dient dazu, einzelne Kanäle von Wellenlängenmultiplexsignalen untereinander zu trennen und/oder zu tauschen. Dazu weist es an den Eingängen 6 jeweils eine Einrichtung 29 auf, die dafür vorgesehen ist, die einzelnen Wellenlängen eines Multiplexsignals in separierter Form zur Verfügung zu stellen. Eine der Einrichtung 29 nachgeordnete Koppeleinrichtung 30 ermöglicht es, die einzelnen Kanäle -entsprechend den Steuerungsvorgaben- aus den Signalisierungs- und Steuerinformationen neu zu verteilen. Das heißt, nachdem die Multiplexsignale in einzelne Summensignale aufgetrennt wurden, erfolgt in der Koppeleinrichtung 30 eine Wellenlängenwandlung der gewünschten Summensignale. Dadurch ist es möglich, daß zwar an den Ausgängen ein Wellenlängenmultiplexsignal vorliegt, welches die Wellenlängen λ₁ und λ₂ aufweist und ein weiteres Wellenlängenmultiplexsignal die Wellenlängen λ₃ und λ₄ aufweist, jedoch beispielsweise in der ausgangsseitigen Wellenlänge λ₁ₐ die Informationen der eingangsseitigen Wellenlänge λ₃ enthalten sind. Die ausgangsseitige Wellenlänge λ₃ₐ enthält dann vorzugsweise die Informationen der eingangsseitigen Wellenlänge λ₁.

Ferner ist dem Element 8a ein weiterer Monitorkoppler 31 zugeordnet, der hier rein beispielhaft der Leitung der Wellenlänge λ₄ zugeordnet ist. Ein derartiger Monitorkoppler 31 kann auch innerhalb des Elements 8a mehreren Leitungen zugeordnet sein.

Selbstverständlich ist es möglich, das Element 8a mit mehr als zwei Ein- und Ausgängen auszustatten, wobei die Anzahl der Eingänge vorzugsweise der Anzahl der Ausgänge entspricht.

Das in Figur 10 beschriebene Element 8a ist selbstverständlich entsprechend der vorangegangenen Ausführungen abwandelbar. Es weist beispielsweise einen elektrischen Eingang und einen optischen Ausgang oder umgekehrt auf, so daß dieses Element 8a in allen vorstehend beschriebenen Ausführungsbeispielen Anwendung finden kann.

Schließlich sei noch angemerkt, daß sämtliche Empfangseinrichtungen und Sendeeinrichtungen nach entsprechender Modifikation beliebig miteinander kombiniert werden können.

## Patentansprüche

1. Verfahren zur optischen Übertragung von Signalisierungs- und Steuerinformationen, die der Überwachung und Steuerung in optischen Netzen mit mindestens einem Netzelement dienen, in denen Nutzinformationen ein- oder mehrkanalig übertragen werden, wobei die Signalisierungs- und Steuerinformationen und die Nutzinformationen in Form eines digitalen Signals übertragen werden, wobei das Signal der Signalisierungs- und Steuerinformationen mittels eines Kodemultiplex-Verfahrens (CDMA) übertragen wird, **dadurch gekennzeichnet, daß** das CDMA-Signal der Signalisierungs- und Steuerinformationen dem Signal der Nutzinformationen additiv aufgeprägt wird, wobei der Modulationshub des CDMA-Signals geringer als der Modulationshub des Signals der Nutzinformationen ist.

2. Verfahren nach Anspruch 1, **dadurch gekennzeichnet, daß** ein für das Kodemultiplex-Verfahren verwendeter Kode unipolar oder bipolar ist.

3. Verfahren nach Anspruch 2, **dadurch gekennzeichnet, daß** der Kode mehrstufig ist.

4. Verfahren nach einem der vorhergehenden Ansprüche, **dadurch gekennzeichnet, daß** das Signal der Signalisierungs- und Steuerinformationen mittels einer Intensitätsmodulation auf die Hüllkurve des Signals von zumindest einem Kanal der Nutzinformationen aufgeprägt wird.

5. Verfahren nach einem der vorhergehenden Ansprüche, **dadurch gekennzeichnet, daß** das CDMA-kodierte Signal der Signalisierungs- und Steuerinformationen und das Signal der Nutzinformationen in einer Baugruppe des Netzelements (2) als Summensignal erzeugt werden.

6. Verfahren nach einem der Ansprüche 1 bis 4, **dadurch gekennzeichnet, daß** das CDMA-kodierte Signal der Signalisierungs- und Steuerinformationen dem in einem Netzelement (2) erzeugten Signal der Nutzinformationen durch einen Modulator (20) aufgeprägt wird.

7. Verfahren nach Anspruch 5, **dadurch gekennzeichnet, daß** das Summensignal, bestehend aus CDMA-Signal und Signal der Nutzinformationen, an mindestens einem Netzelement (2) empfangen wird.

8. Verfahren nach einem der Ansprü-che 5 und 7, **dadurch gekennzeichnet, daß** beim Empfangen des Summensignals ein zu diesem identisches Zusatzsignal erzeugt wird.

9. Verfahren nach Anspruch 8, **dadurch gekennzeichnet, daß** die Nutzinformationen mehrkanalig im Wellenlängenmultiplex übertragen werden und daß von dem Wellenlängenmultiplexsignal mittels eines Filters (14) ein Summensignal, bestehend aus einem Kanal der Nutzinformationen mit zugehörigen Signalisierungs- und Steuerinformationen, separiert wird.

10. Verfahren nach Anspruch 9, **dadurch gekennzeichnet, daß** aus dem Summensignal mit einem Empfänger (15) und einem CDMA-Dekodierer (16) die Signalisierungs- und Steuerinformationen zurückgewonnen werden.

11. Verfahren nach einem der vorhergehenden Ansprüche, **dadurch gekennzeichnet, daß** die Signalisierungs- und Steuerinformationen zurückgewonnen werden, wenn ein gesendetes Kodewort mit dem ein Bit des digitalen Signals der Signalisierungs- und Steuerinformationen verknüpft ist, einem im Empfänger abgelegten Kodewort eindeutig entspricht.

12. Verfahren nach Anspruch 11, **dadurch gekennzeichnet, daß** das zurückgewonnene Signal der Signalisierungs- und Steuerinformationen verarbeitet und anschließend wieder CDMA-kodiert und dem Signal der Nutzinformationen wiederum aufgeprägt wird.

## Claims

1. Method for optical transmission of signaling and control information used for monitoring and control in optical networks that have at least one network element and in which payload information is transmitted in one channel or multiple channels, wherein the signaling information, control information, and payload information are transmitted in the form of a digital signal, wherein the signal for the signaling and control information is transmitted by means of a code-division multiple access method (CDMA), **characterized in that** the CDMA signal for the signaling and control information is additively impressed upon the signal for the payload information, wherein the modulation swing of the CDMA signal is smaller than the modulation swing of the signal for the payload information.

2. Method according to claim 1, **characterized in that** a code used for the code-division multiple access method is unipolar or bipolar.

3. Method according to claim 2, **characterized in that** the code is multilevel.

4. Method according to any one of the preceding claims, **characterized in that** the signal for the signaling and control information is impressed upon the envelope curve of the signal of at least one channel of the payload information by means of intensity modulation.

5. Method according to any one of the preceding claims, **characterized in that** the CDMA-coded signal for the signaling and control information and the signal for the payload information are generated in an assembly of the network element (2) as a summation signal.

6. Method according to any one of claims 1 through 4, **characterized in that** a modulator (20) is used to impress the CDMA-coded signal for the signaling and control information upon the signal for the payload information generated in a network element (2).

7. Method according to claim 5, **characterized in that** the summation signal, consisting of the CDMA signal and the signal for the payload information, is received by at least one network element (2).

8. Method according to any one of claims 5 and 7, **characterized in that**, upon reception of the summation signal, an additional signal is generated that is identical thereto.

9. Method according to claim 8, **characterized in that** the payload information is transmitted in a multi-channel manner using wavelength-division multiplexing, and **in that** a summation signal consisting of a channel for the payload information with associated signaling and control information is separated from the wavelength-division multiplexed signal by means of a filter (14).

10. Method according to claim 9, **characterized in that** the signaling and control information is recovered from the summation signal with a receiver (15) and a CDMA decoder (16).

11. Method according to any one of the preceding claims, **characterized in that** the signaling and control information is recovered when a transmitted code word that is combined with one bit of the digital signal for the signaling and control information uniquely matches a code word stored in the receiver.

12. Method according to claim 11, **characterized in that** the recovered signal for the signaling and control information is processed and then CDMA-encoded again, and is again impressed on the signal for the payload information.

## Revendications

1. Procédé de transmission optique d'informations de signalisation et de commande à des fins de surveillance et à de commande dans des réseaux optiques comportant au moins un élément réseau et dans lesquels des informations utiles sont transmises en monovoie ou en multivoie, les informations de signalisation et de commande et les informations utiles étant transmises sous la forme d'un signal numérique et le signal des informations de signalisation et de commande étant transmis moyennant un procédé d'accès multiple par répartition en code (CDMA), **caractérisé en ce que** le signal CDMA des informations de signalisation et de commande est injecté de manière additive au signal des informations utiles, l'excursion de modulation du signal CDMA étant plus faible que celle du signal des informations utiles.

2. Procédé selon la revendication 1, **caractérisé en ce qu'**un code utilisé pour le procédé d'accès multiple par répartition en code est unipolaire ou bipolaire.

3. Procédé selon la revendication 2, **caractérisé en que** le code est à niveaux multiples.

4. Procédé selon l'une des revendications précédentes, **caractérisé en ce que** le signal des informations de signalisation et de commande est injecté moyennant une modulation d'intensité sur l'enveloppe du signal d'au moins une voie des informations utiles.

5. Procédé selon l'une des revendications précédentes, **caractérisé en ce que** le signal codé CDMA des informations de signalisation et de commande et le signal des informations utiles sont générés comme signal composite dans un composant de l'élément réseau (2).

6. Procédé selon l'une des revendications 1 à 4, **caractérisé en ce que** le signal codé CDMA des informations de signalisation et de commande est injecté par un modulateur (20) dans le signal des informations utiles généré dans un élément réseau (2).

7. Procédé selon la revendication 5, **caractérisé en ce que** le signal composite, composé du signal CDMA et du signal des informations utiles, est reçu sur au moins un élément réseau (2).

8. Procédé selon l'une des revendications 5 et 7, **caractérisé en ce que**, lors de la réception du signal composite, un signal supplémentaire identique à celui-ci est généré.

9. Procédé selon la revendication 8, **caractérisé en ce que** l'information utile est transmise en multivoie par multiplexage en longueur d'onde et **en ce qu'**un signal composite, composé d'une voie des informations utiles avec les informations de signalisation et de commande pertinentes, est séparé du signal de multiplexage en longueur d'onde moyennant un filtre (14).

10. Procédé selon la revendication 9, **caractérisé en ce que** les informations de signalisation et de commande sont récupérées à partir du signal composite à l'aide d'un récepteur (15) et d'un décodeur CDMA (16).

11. Procédé selon l'une des revendications précédentes, **caractérisé en ce que** les informations de signalisation et de commande sont récupérées lorsqu'un mot de code envoyé, auquel est associé un bit du signal numérique des informations de signalisation et de commande, correspond de manière univoque à un mot de code stocké dans le récepteur.

12. Procédé selon la revendication 11, **caractérisé en ce que** le signal des informations de signalisation et de commande récupéré est traité, puis à nouveau codé CDMA et réinjecté dans le signal des informations utiles.
